# EUROPÄISCHE PATENTSCHRIFT

(11) **EP 4 445 230 B1**
(45) Veröffentlichungstag und Bekanntmachung des Hinweises auf die Patenterteilung: **10.06.2026**
(21) Anmeldenummer: 21824388.9
(22) Anmeldetag: 09.12.2021
(51) Int. Cl.: G05B 19/18, H04R 3/12, H04R 27/00, H04M 3/56, H04R 3/00

(54) **VORRICHTUNG ZUR BILDUNG VON EINER KOMMUNIKATIONS- UND STEUERUNGSUMGEBUNG FÜR EINE TECHNISCHE ARBEITSUMGEBUNG**
DEVICE FOR FORMING A COMMUNICATION AND CONTROL ENVIRONMENT FOR A TECHNICAL WORK ENVIRONMENT
DISPOSITIF POUR FORMER UN ENVIRONNEMENT DE COMMUNICATION ET DE COMMANDE POUR UN ENVIRONNEMENT DE TRAVAIL TECHNIQUE

(43) Veröffentlichungstag der Anmeldung: 16.10.2024
(73) Patentinhaber: Georg-August-Universität Göttingen Stiftung Öffentlichen Rechts, Universitätsmedizin, 37099 Göttingen (DE)
(72) Erfinder: FRIEDRICH, Martin, 37075 Göttingen (DE)
(74) Vertreter: Betten & Resch
(86) Internationale Anmeldenummer: PCT/EP2021/085107
(87) Internationale Veröffentlichungsnummer: WO 2023/104313

(56) Entgegenhaltungen:
- DE-A1- 102015 205 463
- US-A1- 2009 299 924

## Beschreibung

### GEBIET DER ERFINDUNG

Die vorliegende Erfindung betrifft eine Vorrichtung zur Bildung einer Kommunikations- und Steuerumgebung für eine technische Arbeitsumgebung.

### TECHNISCHER HINTERGRUND

Bei der Arbeit in einer technischen Arbeitsumgebung wie beispielsweise einem Operationssaal besteht ein Problem darin, dass viele beteiligte Personen und Vorrichtungen koordiniert werden müssen und Informationen zwischen den beteiligten Menschen und Vorrichtungen ausgetauscht, bewertet, und Handlungsentscheidungen getroffen werden müssen.

Diese Aufgabe wird heutzutage zum großen Teil noch großteils ohne maschinelle Unterstützung von den beteiligten Personen mittels Sprachkommunikation bewältigt.

Für die Optimierung der Kommunikation der beteiligten Personen schlägt die DE 10 2015 205 463 A1 vor, mittels eines Mischers und an diesen angeschlossenen Gegensprecheinheiten eine programmgesteuerte Audioumgebung auszubilden, mittels der beispielsweise Signalgruppen gebildet werden können. Eine Matrix legt fest, welche Teilnehmer in welcher Richtung miteinander kommunizieren können. So lassen sich beispielsweise Hierarchie-Ebenen in der Matrix abbilden.

Daneben sind überlappende Gruppen vorgesehen. Schwellwerte werden offenbart, ab denen eine Information weitergeleitet bzw. nicht weitergeleitet wird. Auch direktionale Informationen werden gemessen und zur Steuerung der Audio-Ausgabe verwendet.

Allerdings ist die Matrix, die in der DE 10 2015 205 463 A1 die Kommunikation steuert, im Wesentlichen statisch. Es ist daher eine Aufgabe der Erfindung, die Vorrichtung aus der DE 10 2015 205 463 A1 so weiterzubilden, dass sie eine größere Flexibilität aufweist.

US 2009/0299924 A1 offenbart ein Mensch-Maschine-Interface zur Erhöhung der "situational awareness" in einem chirurgischen Operationsraum.

### ZUSAMMENFASSUNG DER ERFINDUNG

Die vorliegende Erfindung ist im unabhängigen Anspruch 1 definiert. Die abhängigen Ansprüche definieren Ausführungsformen der Erfindung.

Gemäß einem Aspekt umfasst die Erfindung eine Vorrichtung zur Bildung einer computergestützten Kommunikationsumgebung für eine technische Arbeitsumgebung, aufweisend:
Eine Mischvorrichtung, an die eine Vielzahl von Vorrichtungen angeschlossen sind, wobei die Vielzahl von Vorrichtungen umfassen:
eine Mehrzahl von Gegensprecheinrichtungen mit einem Mikrofon und einem Audioausgang, die jeweils einer Person in der technischen Arbeitsumgebung, vorzugsweise einem chirurgischen Operationsraum, zugeordnet sind;
wobei
die Mischvorrichtung mit der Mehrzahl an Gegensprecheinrichtungen für jedes Paar von zwei an die Mischvorrichtung angeschlossenen Gegensprecheinrichtungen steuert, ob und in welche Richtung ein Fluss von Informationen zwischen den beiden angeschlossenen Gegensprecheinrichtungen ermöglicht wird;
wobei zur Steuerung des Informationsflusses eine Steuermatrix vorgesehen ist, die für jedes Paar der an die Mischvorrichtung angeschlossenen Vorrichtungen einen Matrixeintrag aufweist, der den Informationsfluss definiert, wobei die Vorrichtung ferner aufweist:
   ein Messmikrofon zur Messung des Umgebungsschalls, das den Schallpegel im Raum misst; und wobei die Mischvorrichtung aufweist:
   ein computerimplementiertes, von der Mischvorrichtung ausgeführtes Steuerprogram, das die Matrixeinträge abhängig von den von den angeschlossenen Vorrichtungen an die Mischvorrichtung gelieferten Daten dynamisch an die momentane Situation in der technischen Arbeitsumgebung anpasst, wobei die Vorrichtung aufweist:
   ein Gate für jedes der Mikrofone der Gegensprecheinrichtungen, das den an einem der Mikrofone der Gegensprecheinrichtungen eintretenden Schall zur Weitergabe an die Audioausgänge anderen Gegensprecheinrichtungen verstärken oder unterdrücken kann;
   wobei das Steuerprogramm so ausgestaltet ist, dass die Verstärkung oder Unterdrückung des an einem Mikrofon eintretenden und an die Audioausgänge der anderen Gegensprecheinrichtungen auszugebenden Schalles durch das Gate abhängig von der Analyse des durch das Messmikrofon gemessenen Umgebungsschalls dynamisch angepasst wird, wobei
   die Mischvorrichtung das Gate an mindestens einer der Gegensprecheinrichtungen so steuert, dass es den eingehenden Schall ab einem gewissen Mindestschallpegel an Audioausgänge der anderen Gegensprecheinrichtungen weiterleitet, wobei der Mindestschallpegel abhängig vom durch das Messmikrofon gemessenen Schallpegel des Raumes angepasst wird.

Auf diese Weise kann die Vorrichtung dynamisch auf sich ändernde Situationen in der technischen Arbeitsumgebung reagieren und den Signalfluss entsprechend anpassen. Insbesondere kann eine Audioumgebung erzeugt werden, in der einem Benutzer über seinen Audioausgang eine dynamisch angepasste und optimierte Audioumgebung zur Verfügung gestellt wird.

Durch die dynamische Anpassung kann ein hinreichender Signalabstand der Sprache eines Benutzers zum Umgebungsschall sichergestellt werden, was eine Verbesserung der Kommunikationsqualität ermöglicht.

Gemäß einem Ausführungsbeispiel wird die Sprache eines Benutzers dann in seinen eigenen Audioausgang eingespielt, wenn sie den Mindestschallpegel aufweist und an Audioausgänge der anderen Benutzer weitergeleitet wird.

Auf diese Weise bemerkt der Benutzer, wenn sein Mikrofon "stummgeschaltet" ist und spricht dann gegebenenfalls lauter, um den dynamisch angepassten Mindestschallpegel zu erreichen.

Gemäß einem Ausführungsbeispiel weist die Mischvorrichtung ferner auf:
eine Analysevorrichtung zur spektralen Analyse des an dem Messmikrofon eingehenden Schalls, wobei
die Mischvorrichtung derart ausgebildet ist, dass bei Erkennen eines vorbestimmten spektralen Musters durch das Gate einer Gegensprecheinrichtung eine oder mehrere Spektralkomponenten, die dem erkannten spektralen Muster entsprechen, verstärkt oder unterdrückt werden.

Auf diese Weise können dynamisch an den Umgebungsschall angepasst unerwünschte Signale unterdrück bzw. erwünschte Signale verstärkt werden.

Gemäß einem Ausführungsbeispiel weist die Mischvorrichtung ferner auf:
Eine Einrichtung zum Einspielen des von einem Messmikrofon aufgenommenen Umgebungsschalls in den Audioausgang einer oder mehrerer der Gegensprecheinrichtungen.

Auf diese Weise kann der Benutzer in der geschützten Audioumgebung auf Wunsch bzw. falls notwendig den realen Umgebungsschal wahrnehmen und aus der geschützten Umgebung heraustreten.

Gemäß einem Ausführungsbeispiel wird der Schallpegel, mit dem der Umgebungssignal in den Audioausgang eingespielt wird, dynamisch angepasst in Reaktion auf eine Anforderung des Benutzers oder ein von einer Analyseeinrichtung der Mischvorrichtung erkanntes externes Triggersignal.

Dies ermöglicht eine adaptiv angepasste Einspielung der natürlichen Audioumgebung in Reaktion auf einen Wunsch des Benutzers oder ein externes Signal als auslösendes Ereignis.

Gemäß einem Ausführungsbeispiel ist für einen oder mehrere Benutzer eine individuelle Hörkorrekturkurve in der Vorrichtung abgelegt ist.

Auf diese Weise kann die Vorrichtung ein benutzerspezifisches Hörgerät zusätzlich zu ihrer sonstigen Funktionalität implementieren.

Gemäß einem Ausführungsbeispiel umfasst die technische Arbeitsumgebung eines der Folgenden:
einen chirurgischen Operationsraum;
einen Produktionsraum einer industriellen Fertigung;
ein Labor zur wissenschaftlichen oder industriellen Analyse von chemischen oder physikalischen Prozessen oder Stoffen,
einen Kontrollraum zur Überwachung oder Steuerung eines industriellen Produktionsprozesses,
ein Großraumbüro,
eine Konferenzumgebung.

Gemäß einem Ausführungsbeispiel wird dann, wenn die in der Mischvorrichtung von angeschlossenen Vorrichtungen eingehenden Signale ein Triggersignal anzeigen, eine Änderung der Matrixdaten vorgenommen. Dadurch kann eine dynamisch adaptierbare Vorrichtung geschaffen werden, die sich an wechselnden Gegebenheiten anpasst.

Gemäß einem Ausführungsbeispiel umfasst das Steuerprogramm Informationen über den zeitlichen Ablauf der Operation im OP-Raum und auf Grundlage dieser Informationen wird dann, wenn ein Eingangssignal der Sensordaten ein Triggerereignis anzeigt, das ein Eintreten eines Ereignisses im zeitlichen Ablauf der Operation darstellt, die Steuermatrix angepasst.

Die Abbildung des Ablaufplanes der Operation ermöglicht eine dynamische Anpassung der Steuermatrix an die jeweilige Situation im OP, abhängig vom Fortschritt der Operation, und es kann automatisch entsprechend dem Ablauf der OP reagiert werden.

Auf Grundlage dieser Informationen kann so, wenn die in der Mischvorrichtung von angeschlossenen Vorrichtungen eingehenden Signale das Erreichen eines bestimmten Punkts im zeitlichen Ablauf anzeigen, eine Änderung der Matrixdaten vorgenommen werden.

So kann beispielsweise eine Signalisierung eines bestimmten OP-Schrittes, etwa die Anforderung des Tackers, signalisieren, dass die OP bald vorbei ist und durch Anpassung der Matrixelemente beispielsweise die Anforderung von Personal der Lagerungshilfe auslösen.

Gemäß einem Ausführungsbeispiel dient als Triggersignal eines der Folgenden:
Das Erreichen eines Signalwerts in einem oder mehreren Sensordaten, die das Erreichen eines bestimmten Punkts im zeitlichen Ablauf anzeigen;
das Erreichen eines Schwellwerts in einem oder mehreren Sensordaten;
die Detektion eines Schlüsselworts oder Schlüsselsignals in einem erfassten akustischen Signal;
eine Eingabe des Benutzers zum Lernen einer neuen Situation.

Auf diese Weise können verschiedene Anpassungen der Steuermatrix und damit der Funktionalität der Vorrichtung an sich ändernde äußere Gegebenheiten implementiert werden.

In einem Ausführungsbeispiel ist das Steuerprogram ganz oder teilweise mittels eines neuronalen Netzes implementiert, das als Eingang die Signale von der Mehrzahl von Sensoren erhält und als Ausgang die Steuermatrix liefert. Das neuronale Netz wird dabei vorzugsweise mittels von Daten aus echten Operationssituationen trainiert und passt sich so immer weiter den Bedürfnissen der Benutzer und an neue Situationen an.

In einem Ausführungsbeispiel umfassen die Eingangssignale der Steuermatrix Sprachsignale, die mittels Spracherkennung erfasst und auf Schlüsselbegriffe untersucht werden, wobei ein Schlüsselbegriff ein Triggersignal darstellt.

Auf diese Weise kann eine Anpassung der Steuermatrix mittels Sprachsteuerung implementiert werden.

In einem Ausführungsbeispiel identifizieren die angeschlossenen Sensoren, insbesondere mittels Barcode oder QR-Code, die Funktion eines Benutzers innerhalb einer Benutzergruppe und basierend auf der Funktion dem Benutzer werden nur diejenigen Daten von der Mischvorrichtung an den Benutzer übermittelt, die gemäß seiner Funktion und einem Hierarchie- oder Funktionsplan relevant sind.

### BESCHREIBUNG DER FIGUREN

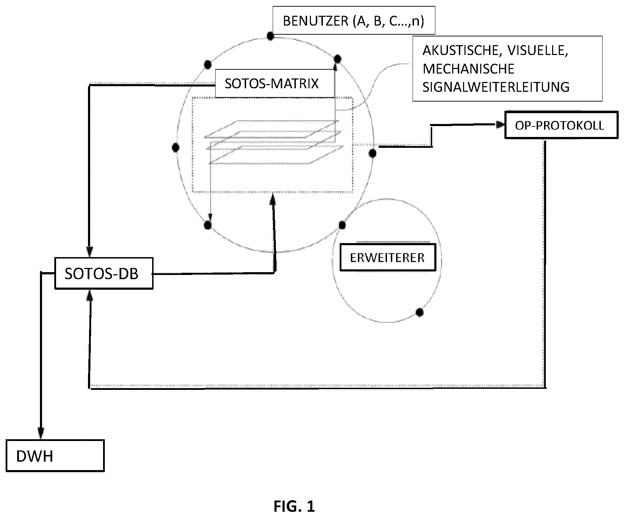

Fig. 1 zeigt schematisch eine Vorrichtung gemäß einem Ausführungsbeispiel der Erfindung.

### DETAILLIERTE BESCHREIBUNG

Nachfolgend wird die vorliegende Erfindung anhand von Ausführungsbeispielen unter Bezugnahme auf die beigefügten Zeichnungen beschrieben.

Fig. 1 zeigt schematisch eine Vorrichtung gemäß einem Ausführungsbeispiel der Erfindung. Das kreisrunde Element in der Mitte von Fig. 1 ist dabei eine Mischvorrichtung, an die Gegensprecheinrichtungen (nicht gezeigt) einer Mehrzahl von Benutzern A, B, C,...n angeschlossen sind.

Die Mischvorrichtung steuert für jeweilige Paare der angeschlossenen Gegensprecheinrichtungen dahingehend, ob und in welche Richtung ein Fluss von Informationen zwischen den beiden angeschlossenen Gegensprecheinrichtungen ermöglicht wird. Dafür ist zur Steuerung des Informationsflusses eine Steuermatrix vorgesehen, in Fig. 1 bezeichnet als SOTOS-Matrix, die für jedes Paar der an die Mischvorrichtung angeschlossenen Vorrichtungen einen Matrixeintrag aufweist, der den Informationsfluss definiert.

Die Vorrichtung weist ferner ein nicht gezeigtes ein Messmikrofon zur Messung des Umgebungsschalls, das den Schallpegel im Raum misst, auf.

Die Mischvorrichtung erhält gemäß einem Ausführungsbeispiel Sensordaten, beispielsweise über den Zustand des OP-Raums (Luftdruck, Temperatur, Feuchtigkeit, ggf. die Raumgeometrie gemessen mittels z. b. LIDAR), aber insbesondere auch die Eingangssignale der Mikrofone der Gegensprecheinrichtungen und des Messmikrofons.

Die Mischvorrichtung kann beispielsweise aktive und/oder passive Filter oder mittels KI implementierte Filter umfassen. Die Eingangssignale werden von dem Mischer mittels der Steuermatrix verarbeitet und als Resultat werden Ausgangssignale ausgegeben, z. B. als Sprachsignale wie durch die Steuermatrix als gesteuerter Signalfluss vorgegeben an die Benutzer über die Gegensprecheinrichtungen ausgegeben, aber gemäß Ausführungsbeispielen beispielsweise auch als Alarmsignale, als Musik, etc.,. Weitere Elemente wie die SOTOS-DB, ein Extender, oder ein OP-Protokoll können vorgesehen sein und werden später beschrieben.

Bei den Gegensprecheinrichtungen handelt es sich vorzugsweise um eine Kombination aus einem möglichst schalldichten Kopfhörer (over-the-ear oder in-ear), der den Träger möglichst gut von Umgebungsgeräuschen abschirmt. Ein solcher Kopfhörer wird vorzugsweise kombiniert mit einem Mikrofon zu einem Headset, wobei das Mikrofon vorzugsweise ein Richtmikrofon ist, dessen Richtcharakteristik auf den Benutzer ausgerichtet ist. So lässt sich für den Benutzer ein "geschützter Audio-Erfahrungsraum" ausbilden, der jedem Benutzer nur diejenigen Audiosignale zukommen lässt, die gemäß Steuerung durch die Mischvorrichtung für ihn vorgesehen sind.

Die Gegensprecheinrichtungen, je eine für einen Benutzer im OP-Raum, sind wie erwähnt an die Mischvorrichtung angeschlossen. Die Mischvorrichtung steuert dann ob und in welche Richtung ein Fluss von Informationen zwischen einem Paar von angeschlossenen Gegensprecheinrichtungen ermöglicht wird. Dabei ist zur Steuerung des Informationsflusses eine Steuermatrix vorgesehen (SOTOS-Matrix in Fig. 1), die für jedes Paar der an die Mischvorrichtung angeschlossenen Gegensprecheinrichtungen einen Matrixeintrag aufweist, der den Informationsfluss definiert.

Die Vorrichtung weist ferner ein Messmikrofon zur Messung des Umgebungsschalls auf, das den Schallpegel im Raum misst. Die Mischvorrichtung wiederum weist ein computerimplementiertes, von der Mischvorrichtung ausgeführtes Steuerprogram auf, das die Matrixeinträge abhängig von den von den angeschlossenen Vorrichtungen an die Mischvorrichtung gelieferten Daten dynamisch an die momentane Situation in der technischen Arbeitsumgebung anpasst. Das Messmikrofon ist dabei vorzugsweise zentral im Raum (z. B. an der Decke) angeordnet und ist sensitiv auch für Infraschall (<10 Hz) und Supraschall (> 20kHz), um Störgeräusche in diesem Frequenzbereich erfassen zu können.

Zur Anpassung des Informationsflusses über die Anpassung der Matrixeinträge ist ein Gate für jedes der Mikrofone der Gegensprecheinrichtungen vorgesehen, das den dem Mikrofon der Gegensprecheinrichtungen eintretenden Schall zur Weitergabe an die Audioausgänge anderen Gegensprecheinrichtungen verstärken oder unterdrücken kann. Dabei ist das Steuerprogramm so ausgestaltet, dass die Verstärkung oder Unterdrückung des an einem Mikrofon eintretenden und an die Audioausgänge der anderen Gegensprecheinrichtungen auszugebenden Schalles durch das Gate abhängig von der Analyse des durch das Messmikrofon gemessenen Umgebungsschalls dynamisch angepasst wird.

Auf diese Weise kann dynamisch auf eine Änderung des Umgebungsschalls reagiert werden.

So ist beispielsweise in einem Ausführungsbeispiel vorgesehen, dass die Mischvorrichtung das Mikrofon-Gate an mindestens einer der Gegensprecheinrichtungen so steuert, dass es den eingehenden Schall erst ab einem gewissen Mindestschallpegel an Audioausgänge der anderen Gegensprecheinrichtungen weiterleitet. Dabei wird der Mindestschallpegel abhängig vom durch das Messmikrofon gemessenen Schallpegel des Raumes angepasst. Erhöht sich beispielsweise der Umgebungsschallpegel, so wird der Mindestschallpegel am Mikrofon der Gegensprecheinrichtung erhöht, und erst ab einer höheren Sprechlautstärke wird die Sprache des Benutzers an die Audioausgänge der anderen Benutzer weitergeleitet. Auf diese Weise kann sichergestellt werden, dass die weitergeleiteten Audioinformationen bzw. die weitergeleitete Sprache einen Mindest-Signalabstand zum Umgebungsschall einhalten, was die Qualität der Kommunikation verbessert.

Gemäß einem Ausführungsbeispiel wird dabei die Sprache eines Benutzers dann in seinen eigenen Audioausgang eingespielt, wenn sie den Mindestschallpegel aufweist und an Audioausgänge der anderen Benutzer weitergeleitet wird. Auf diese Weise erhält der Benutzer Feedback dahingehend, ob seine Sprache den Mindestschallpegel erfüllt, um weitergeleitet zu werden. Er kann dann abhängig vom Feedback gegebenenfalls lauter sprechen, um sicherzustellen, dass er den Mindestschallpegel erreicht und ihn die anderen Benutzer hören. Erst wenn er den Mindestschallpegel erreicht, wird seine Sprache weitergeleitet, darunter ist sein Mikrofon "stummgeschaltet", so dass seine Sprache nicht für andere Benutzer hörbar ist. Insbesondere in Umgebungen mit variablem Umgebungsschall oder mobilem, ortsveränderlichem Benutzer kann auf diese Weise eine hohe Kommunikationsqualität sichergestellt werden.

Gemäß einem Ausführungsbeispiel kann als "Gate" im Sinne eines herkömmlichen "Noisegates" fungieren, das komplett den am Mikrofon eingehenden Schall an den Audioausgang von einer oder mehreren der anderen Gegensprecheinrichtungen durchlässt oder komplett blockiert. D. h. das Gate ist entweder "on" oder "off", je nach gemessenem Umgebungsschall bzw. Umgebungsschalldruck, der durch das Messmikrofon gemessen wird.

Neben einem reinen "on" oder "off" kann das Gate in einem Ausführungsbeispiel abhängig von der Eingangssignalstäke am Messmikrofon oder dem Mikrofon der Gegensprecheinrichtung das Eingangssignal verstärken oder unterdrücken, ggf. auch in einem nichtlinearen Zusammenhang zwischen Verstärkung/Unterdrückung und Eingangssignalstärke. Dadurch kann der Dynamikumfang des Eingangssignals vergrößert werden (Enhancer-Funktion) oder verringert werden (Compressor-Funktion). Gemäß einem Ausführungsbeispiel kann das Gate auch eine Begrenzer-Funktion ausführen (Limiter-Funktion), die den Ausgang auf eine maximale Signalstärke begrenzt. Zusätzlich oder alternativ kann das Ausgangs-Audiosignal auf eine bestimmte Mindestsignalstärke geregelt werden, um eine gute Hörbarkeit zu gewährleisten. Durch Kombination von einer oder mehreren derartigen Gate-Funktionalitäten lässt sich die Sprachqualität an den Audioausgängen optimal anpassen.

Gemäß einem Ausführungsbeispiel umfasst die Vorrichtung eine Analysevorrichtung zur spektralen Analyse des an dem Messmikrofon eingehenden Schalls. Die Mischvorrichtung ist dabei derart ausgebildet ist, dass bei Erkennen eines vorbestimmten spektralen Musters durch das Gate einer Gegensprecheinrichtung eine oder mehrere Spektralkomponenten, die dem erkannten spektralen Muster entsprechen, verstärkt oder unterdrückt werden.

Auf diese Weise unerwünschte Geräusche mittels dynamischer Anpassung der Steuermatrix unterdrückt werden. So hat beispielsweise das Geräusch beim Öffnen einer sterilen Verpackung einen charakteristischen Spektralanteil oberhalb von 22 kHz. Das entsprechende Muster ist gemäß einem Ausführungsbeispiel in der Mischvorrichtung abgelegt. Detektiert die Spektralanalysevorrichtung im Schall des Messmikrofons ein derart unerwünschtes Signal, so kann das Gate des Mikrofons der Gegensprecheinrichtung entweder die unerwünschte Signalkomponente unterdrücken bzw. herausfiltern. Alternativ kann sie das Mikrofon der Gegensprecheinrichtung komplett stummschalten, falls eine spektrale Unterdrückung nicht hinreichend wirkungsvoll möglich ist. Nachdem das unerwünschte Geräusch endet, kann die Unterdrückung bzw. Stummschaltung wieder aufgehoben werden.

Neben einer kompletten Unterdrückung des unerwünschten Geräuschs kann auch stattdessen eine nur teilweise Unterdrückung erfolgen. Beispielsweise hat eine Säge im chirurgischen OP-Raum ein charakteristisches Frequenzspektrum im Bereich 5-8 kHz. Wird dieser Spektrumsanteil im Eingangsschall detektiert, so kann die Steuermatrix so angepasst werden, dass die Frequenzanteile des Sägegeräusches im Rahmen einer Equalizer-Steuerung etwas unterdrückt bzw. abgeschwächt werden. Dadurch verringert sich der störende Effekt des Geräuschs, er ist aber immer noch wahrnehmbar.

Neben der Unterdrückung unerwünschter Geräusche kann die Mischvorrichtung auch zur Verstärkung wichtiger bzw. erwünschter Geräusche, die gut hörbar sein sollen, ausgebildet sein. So hat ein elektronisches Messer (eKnife) im OP-Raum beispielsweise einen charakteristischen Spektralanteil bei 507 Hz. Wird dieser detektiert, so kann er durch die Mischvorrichtung für einzelne Benutzer, z. B: den Chirurgen, gezielt verstärkt werden. Dies kann ggf. einhergehen mit gleichzeitiger leichter Unterdrückung anderer Spektralanteile wie dem von Sprache. Auf diese Weise kann die Wahrnehmbarkeit wichtiger Geräusche für den Benutzer verstärkt werden.

Das Messmikrofon, dessen Signal die dynamische Anpassung der Steuermatrix auslöst, kann dabei ein im Raum befindliches Mikrofon zur Messung des Umgebungsschalls oder auch das Mikrofon der Gegensprecheinrichtung des Benutzers sein. Abhängig von der durchzuführenden Anpassung kann das Messmikrofon unterschiedlich sein. So kann zur Anpassung des Mindestpegels der Gegensprecheinrichtung ein Raummikrofon zur Messung des Umgebungsschalls verwendet werden. Zur Identifikation des Aufreißens einer sterilen Verpackung und nachfolgenden Unterdrückung des Geräuschs oder Stummschaltung des Mikrofons der Gegensprecheinrichtung hingegen kann das Mikrofon einer Gegensprecheinrichtung verwendet werden.

Gemäß einem Ausführungsbeispiel weist die Mischvorrichtung eine Einrichtung zum Einspielen des von einem Messmikrofon aufgenommenen Umgebungsschalls in den Audioausgang einer oder mehrerer der Gegensprecheinrichtungen auf. Der Umgebungsschall kann damit dem Benutzer eingespielt werden, um einen "normalen Außenton" abzubilden.

Vorzugsweise wird der Schallpegel, mit dem der Umgebungssignal in den Audioausgang eingespielt wird, dynamisch angepasst in Reaktion auf eine Anforderung des Benutzers oder ein von einer Analyseeinrichtung der Mischvorrichtung erkanntes externes Triggersignal. Auf diese Weise kann beispielsweise ein Benutzer auf Anforderung hin ,(z. B. per Knopfdruck) aus der geschützten Audioumgebung "heraus", und zwar ohne den Kopfhörer abzunehmen. Als externes Triggersignal kommt beispielsweise ein bestimmtes erkanntes Signal, z. B. ein Alarmsignal, in Frage.

Insgesamt lassen sich über die Mischvorrichtung und die Steuermatrix beliebige gewünschte und dynamisch anpassbare Audio-Umgebungen generieren, die dahingehend definiert sind, wer auf welche Weise was und wen hört.

Bei dem Messmikrofon zur Messung des Umgebungsschalls handelt es sich gemäß einem Ausführungsbeispiel um ein vorzugsweise zentral im Raum, etwa an der Decke, angebrachtes, von den Mikrofonen der Gegensprecheinrichtungen separates Mikrofon. Es kann aber gemäß einem Ausführungsbeispiel zusätzlich dazu oder alternativ dazu das Mikrofon von einer oder mehreren Gegensprecheinrichtungen als Messmikrofon fungieren.

Gemäß einem, Ausführungsbeispiel ist ferner für einen oder mehrere Benutzer eine individuelle Hörkorrekturkurve in der Vorrichtung abgelegt ist. Der Audioausgang an der Gegensprecheinrichtung des Benutzers wird dann von der Mischvorrichtung so angesteuert wird, dass eine Anpassung des an den Benutzer ausgegebenen Audiosignals gemäß der abgelegten Hörkorrekturkurve erfolgt. Auf diese Weise implementiert die Vorrichtung gewissermaßen ein an den jeweiligen Benutzer angepasstes Hörgerät.

Nachfolgend werden weitere Ausführungsbeispiele beschrieben, deren Merkmale zusätzlich oder alternative zu den bisher beschriebenen Merkmalen implementiert sein können.

Gemäß einem weiteren Ausführungsbeispiel kann mittels eines Optimiermoduls über Feedback von den Benutzern die Signalverarbeitung und die Steuermatrix optimiert werden. So können beispielsweise bestimmte frequenzabhängige Verstärkungen oder Unterdrückungen modifiziert werden, indem der zugehörige Frequenzgang eines Filters oder Verstärkers eines Gates modifiziert wird.

Mittels der zuvor beschriebenen Mischvorrichtung lassen sich wie zuvor beschrieben mit einem Pool aus vorzugsweise aktiven akustischen Filtern zur Implementierung der Gates genau beschriebene akustische Gegebenheiten abbilden bzw. so verändern, dass unerwünschte Frequenzanteile unterdrückt oder andere (erwünschte oder fehlende) angehoben werden. Der (aktive) Filter passt sich dabei dynamisch der Geräuschcharakteristik an. So können z.B. durch eine FFT Störgeräusche detailliert definiert, erfasst und automatisiert gefiltert werden. Des Weiteren ist als Komponente des aktiven Filters gemäß einem Ausführungsbeispiel ein KI-Filter vorgesehen, der mit Hilfe von neuronalen Netzen auf die Bedürfnisse der Teammitglieder reagiert und ein Input für die aktiven Filter liefert. Hier können beispielsweise hörgerechte, sprachverständnisverbessernde Effekte ebenso erzeugt werden wie Effekte eines automatisierten "Hinhörens", indem Laufzeitunterschiede zwischen verschiedenen Mikrofonierungen im Team verrechnet werden. Der KI-Filter kann durch eine Art "Potentiometer" als "Optimizer" aktiv durch den Nutzer stimuliert werden und/oder durch Erfahrungen der Teammitglieder angelernt werden.

Auf diese Weise kann nicht nur über die Gegensprecheinrichtungen der akustische Signalfluss zwischen den Benutzern gesteuert werden, vielmehr kann er adaptiv angepasst und verbessert werden.

Gemäß einem Ausführungsbeispiel geht eine solche Anpassung der Funktionalität an neue Gegebenheiten mit einer Anpassung oder Änderung der Matrixdaten der Steuermatrix einher. Diese kann erfolgen ausgelöst durch ein "Triggerereignis", das eine solche Anpassung der Matrixdaten bewirkt. Triggerereignis kann dabei eine Eingabe des Benutzers sein, beispielsweise zum "Lernen" einer neuen Situation. Ein Triggersignal kann aber auch sein das Erreichen eines Signalwerts in einem oder mehreren Sensordaten oder in einem von dem Messmikrofon erfassten Signal, die das Erreichen eines bestimmten Punkts im zeitlichen Ablauf anzeigen; das Erreichen eines Schwellwerts in einem oder mehreren Sensordaten bzw. im Signal des Messmikrofons; oder die Detektion eines Schlüsselworts oder Schlüsselsignals in einem erfassten akustischen Signal (z. B. resultierend aus Spracherkennung).

Auf diese Weise kann dann die Steuermatrix modifiziert und die Funktionalität der Vorrichtung an die neuen Gegebenheiten angepasst werden.

Gemäß einem Ausführungsbeispiel können als Triggersignal dienen:
Vom Messmikrofon erfasste Schalldaten,
Sensordaten von angeschlossenen Sensoren;
Videodaten oder Bilddaten aus Bilderkennung;
Sprachdaten aus Spracherkennung.

Fig. 1. zeigt wie bereits erwähnt schematisch die Steuermatrix (SOTOS-Matrix) des Steuerprogramms der Vorrichtung gemäß einem Ausführungsbeispiel.

In dieser Matrix werden gemäß einem Ausführungsbeispiel die zentralen Steueraufgaben des Systems implementiert, insbesondere wer wen oder was in welcher Form über sein Gegensprecheinrichtung hört. Ein Matrixeintrag definiert dabei beispielsweise die Art und den Umfang in welchem Informationen von einem angeschlossenen Teilnehmer oder einer angeschlossenen Vorrichtung X zu einem weiteren Teilnehmer oder einer angeschlossenen Vorrichtung Y ausgegeben oder weitergeleitet werden. Für jeden angeschlossenen Teilnehmer bzw. für jedes Paar von angeschlossenen Teilnehmern und/oder Vorrichtungen ist ein entsprechender Matrixeintrag vorgesehen. Der Matrixeintrag kann dabei auch komplex sein und einer Verarbeitungsvorschrift entsprechen, nach der Eingangsdaten verarbeitet oder umgewandelt und Ausgangsdaten erzeugt werden. Der Matrixeintrag definiert damit insbesondere, wer wen in welcher Form hört und wie erfasste Schallsignale an die Benutzer über deren jeweilige Audioausgabevorrichtungen weitergeleitet werden.

Einen weiteren Bestandteil des Systems stellt gemäß einem Ausführungsbeispiel der SOTOS-Extender dar, welcher zu der SOTOS-Matrix zugeschaltet werden kann. Dieser bildet dann eine weitere Steuermatrix, die beispielsweise ein externes Team implementiert. Der SOTOS-Extender stellt damit ein Erweiterungs-System der Vorrichtung dar.

Ein Protokoll-Server nimmt gemäß einem Ausführungsbeispiel alle Outputsignale auf, protokolliert sie, monitort das Vorgehen, erzeugt ein Logbuch und verteilt die Information an eine Datenbank (dargestellt als SOTO-DB). Diese hat dann eine Anbindung z.B. an das digitale Krankenhaus (DWH).

Die Eingangssignale der Steuermatrix können dabei gemäß einem Ausführungsbeispiel sein:
Akustische Inhalte (verbale oder tonale, Geräusche, zeitlich zu beschreibende Tonfolgen oder Geräuschen, Musik verschiedenste Genres, codierte bzw. komprimierte Tonträger), auch elektrische Zustände und Abläufe (z.B. Spannungen, Stromstärken,
Impulse, zeitliche Abläufe, Schalterzustände) oder elektronisch codierte Inhalte (z.B. Programmiersprachen, Hexadezimalcodes, Zeichenfolgen, math. Formeln).

Sprachsignale können dabei beispielsweise mittels Spracherkennung erfasst und auf Schlüsselbegriffe hin untersucht werden, die dann als Triggerereignis dienen können für die Anpassung der Steuermatrix.

Mittels des geschilderten Ausführungsbeispiels kann ein Umfeld im OP-Raum geschaffen werden, das für den Benutzer einen geschützten Erfahrungsraum bereitgestellt. Der geschützte Erfahrungsraum kann erreicht werden, indem (okkludierende) Hörsysteme mittels aktiver und passiver Geräuschunterdrückung von dem lauten, mit akustischen Informationen gefüllten Umfeld abschotten, jeweils implementiert durch die Steuermatrix.

Die aktive Geräuschunterdrückung im System kann statisch, aber auch dynamisch erfolgen, indem die sich ändernde Geräuschsituation in der Arbeitsumgebung durch Algorithmen gesteuert zu einer Änderung der Geräuschfilter führt. Dabei ist dann die sich ändernde Geräuschsituation das "Triggersignal" zur Anpassung der Steuermatrix.

Wie bereits zuvor beschrieben können gemäß einem Ausführungsbeispiel Gates (oder auch Noisegates) das Öffnen und Schließen der im System verwendeten Mikrofone der Gegensprecheinrichtungen regeln. Diese Gates sind dabei gemäß einem Ausführungsbeispiel so ausgebildet, dass neben einer statischen Grundeinstellung durch einen Steueralgorithmus gesteuert die Öffnungsschwellen automatisiert beeinflusst werden.

Die Ansteuerung dieser Gates im System kann so ausgebildet sein, dass die Integration der umgebenden Maschinen dazu führen kann, dass vorhersehend (zeitnah zukünftig aufkommende Lärmqualitäten) die Thresholds bzw. akustische Filter (passager) in Echtzeit angepasst werden. So kann ein Ablaufplan der Operation in dem Steuerprogramm abgebildet werden, wobei ein Signal eines Sensors ein Eintreten eines Ereignisses in diesem Ablaufplan anzeigt. Dies kann dann ein Triggerereignis sein, das z. B. die Schwellwerte der Gates nach oben setzt (was einer Anpassung der Steuermatrix entspricht), weil z. B. ein "lautes Gerät" gemäß OP-Ablauf eingeschaltet wird. Dies kann hoc reagierend aktuell zu einem dem Menschen angepassten optimierten Lärmschutz führen.

Ein geschützter Erfahrungsraum kann aber auch erreicht werden, indem andere mögliche Sinneswahrnehmungen unterdrückt oder verstärkt werden, um diese individuell mit für den Erfahrungsraum relevanten Informationen nutzen zu können. Sinneswahrnehmungen können dabei neben akustischen auch visuelle und taktile bzw.

Vibrationswahrnehmungen sein, hierzu steuern dann die Ausgangssignale der Steuermatrix entsprechende Aktuatoren an.

Nachfolgend wird die Funktion der Vorrichtung und Steuermatrix gemäß einem Ausführungsbeispiel weiter im Detail beschrieben.

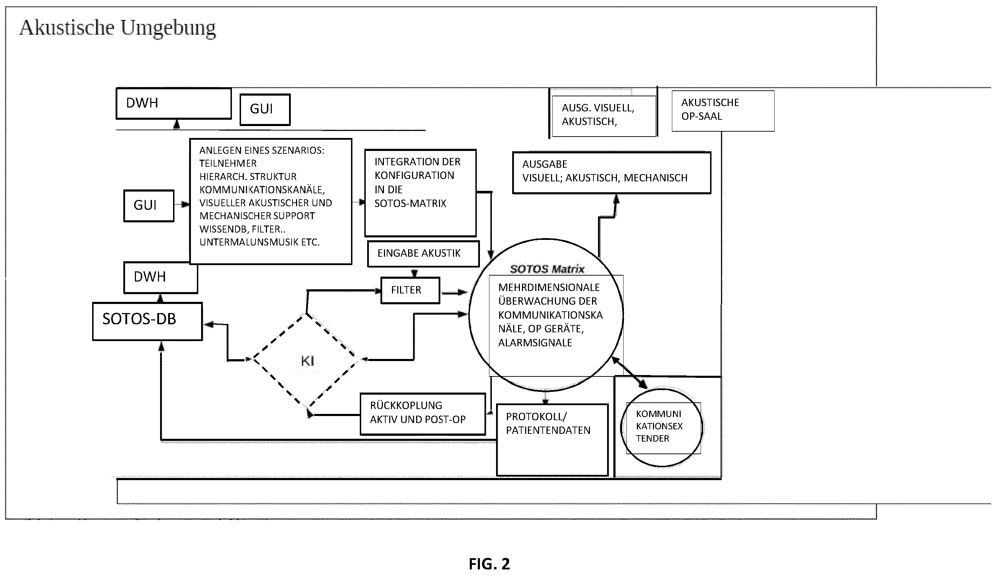

Fig. 2 veranschaulicht die Funktionsweise der Vorrichtung und der Steuermatrix gemäß einem Ausführungsbeispiel. Zunächst wird mittels eines Graphical User Interface (GUI) eine Konfiguration des Arbeitsumfeldes vorgenommen und in das Hauptmodul des Steuerprogramms (dargestellt als SOTOS Matrix bzw. Steuermatrix) geladen. Dabei werden das Szenario, die User, mögliche visuelle und akustische Signale sowie die akustischen Filter konfiguriert und an die Arbeitsumgebung angepasst. Das Steuerprogramm mit seiner Steuermatrix übernimmt dann das Informations-Management. Im Einzelnen werden die akustischen Kanäle überwacht und User-spezifisch verwaltet. Es werden sowohl visuelle wie akustische und mechanische Inputs (Alarm/Info) an die entsprechenden Teilnehmer verteilt. Die gesamte akustische Performance wird dabei durch das KI-Akustikmodul unterstützt, das beispielsweise adaptierbare Filter implementiert. Instantan werden aktive Filter angelernt und so die akustische Arbeitsumgebung der jeweiligen User optimiert. Das System kann dabei auch auf unvorhergesehene Geräusche reagieren (z.B. Knall, Flugzeug etc.) und sie filtern und u.a. einen intelligenten dynamischen, sich der Umgebung automatisiert anpassenden Echtzeit Hörschutz darstellen. Dies ist insbesondere dann möglich, wenn die Parameter der Steuermatrix bereits entsprechend konfiguriert bzw. "gelernt" sind, indem die entsprechenden spektralen Muster hinterlegt sind. Damit wird gewährleistet, dass der Stresspegel für den User auf ein mögliches Minimum reduziert wird.

Das Steuerprogramm sieht dabei gemäß einem Ausführungsbeispiel eine Anbindung an die Außenkommunikation vor. Während der gesamten Arbeitsphase des Systems läuft dabei ein KI-Modul und ein Protokollmodul. Das KI-Modul überwacht und lernt (z. B. mittels Feedback durch den Benutzer), und wird somit mit jedem Einsatz auf unvorhergesehene Geräusche immer besser eingestellt. Das Protokollmodul monitort das Geschehen, legt ein Logbuch an und ergänzt die digitale Patientendatenbank.

Gemäß einem Ausführungsbeispiel repräsentiert bzw. implementiert die Vorrichtung ein möglichst umfassendes digitales Abbild der Arbeitsumgebung des OP-Raums. Dabei wird ein möglichst umfassendes digitales Abbild der Arbeitsumgebung mit Menschen und Maschinen und allen den Arbeitsprozess bestimmenden Umständen und Einflussfaktoren sowie räumlichen Gegebenheiten erfasst und durch selbstlernende Steuerung erstellt. Hierzu umfasst das Steuerprogramm Informationen über den zeitlichen Ablauf der Operation im OP-Raum und auf Grundlage dieser Informationen wird dann, wenn ein Eingangssignal der Sensordaten ein Triggerereignis anzeigt, das ein Eintreten eines Ereignisses im zeitlichen Ablauf der Operation darstellt, die Steuermatrix angepasst.

Auf diese Weise kennt die Vorrichtung die Zielsetzung des zu steuernden Arbeitsprozesses. Gemäß einem Ausführungsbeispiel werden dabei folgende Parameter als Eingangsparameter für die Steuermatrix verwendet, wobei diese ggf. mittels Sensoren erfasst werden:
a) verbale Kommunikationspakete aller Teammitglieder (wer spricht, wie laut, etc.)
b) Traffic der Teammitglieder (Barcodes) Erkennen der Teamrollen
c) Traffic des Equipments, Geräte, Werkzeuge,
d) Parameter der klimatischen Arbeitsumgebung und angrenzender Areale, d. h. z. B. Informationen zu Temperatur, Druck, Druckgradienten zum Umfeld Status Türen (auf zu), Licht, Feuchte
e) Status relevanter Technik in der Arbeitsumgebung (Messwerte, Eistellungen, Zustand, Wartungszeiten, Sicherheit, Laufzeit, Wartungszeit, Interaktionen, ...)
f) Dimension bzw. Status der laufenden Prozeduren und Abläufe (Timeline, Produktivität, Abhängigkeiten zu anderen Prozessen, Feedback Management,
h) Sprachinhalte (Indexwörter zur Ablaufeinschätzung und Steuerung abhängiger Prozesse, Sprachsteuerung Technik, Prozesse, Dokumentationen
i) Video und Bilder (Gesichtserkennung, z. B. auch via Barcode), Einschätzung von Situationen, Abläufen um abhängige Prozesse zu erkennen (z. B. Anästhesist betritt den Raum) und zu steuern, Dokumentationen, Videokonferenzen, Video-Calls
j) Gesamthierarchie der Prozesse, Personen, übergeordnetes Management, Ablaufpläne, Materialplanung
k) akustischen Feedbacks von Maschinen und Tätigkeiten (Arbeitsgeräusche, Motorgeräusche, Werkzeuggeräusche, Reifengeräusche, Getriebe, Lüfter,
l) Gesundheitsdaten der Menschen im Arbeitsumfeld (EKG, Atmung, Körpertemperatur, Blutdruck, SaO2, CO2 Gifte, Farbtemperatur, Körperhaltung, körperliche Belastung, Bewegung)

Das Steuerprogramm der Vorrichtung erfasst, wertet aus, interpretiert, steuert, plant und gibt Feedback an die Benutzer im Arbeitsfeld, steuert Interaktion mit der Technik (z. B. EKG einschalten), Klimaanlage, Türzustände, etc. Das System gemäß einem Ausführungsbeispiel kann dabei auch Warnen (Alarmsignal), führen (z. B: durch visuelle Informationen), Bestellungen aufgeben (Transportbett anfordern).

Die Vielzahl der Sensoren bzw. Ihrer Daten werden erfasst und durch die Steuermatrix bzw. das Steuerprogramm verarbeitet und dieses produziert dann gemäß dem Steuerprogram Output zur Weitegabe an die Benutzer oder zur Steuerung von Vorrichtungen. So wird dann beispielsweise veranlasst, dass eine Maschine, die heiß läuft, bestimmte Geräusche macht und mehr Strom zieht, langsamer dreht. Oder es wird ein Mensch, der lange keine Pause machte, tachycard ist, schnell atmet und schwer atmet und einen seltenen Lidaschlag hat ist erschöpft und droht Fehler zu machen, gewarnt.

Dies wird ermöglicht durch die Sensordaten und deren Verarbeitung durch das Steuerprogramm und seine adaptierbare Steuermatrix sowie durch die Abbildung des OP-Ablaufs im Steuerprogramm. Beispielsweise zeigt die Anforderung des Tackers im OP, dass die Haut verschlossen ist und die OP gleich fertig ist, was dann abhängige Prozesse auslöst wie etwa, dass Personal der Lagerungshilfe abgerufen wird. Gemäß einem Ausführungsbeispiel wird auch Zustand des Patienten erfasst, z. B. als digitales Abbild aus vielen Daten, Vitalwerte, Laborwerte, lfd. Medikamenten-Dosen pro Zeit, Beatmungsparameter, prognostizierte Operations-Dauer, und abhängig von den Sensordaten wird dann entsprechender Output durch die Steuermatrix bzw. das Steuerprogramm erzeigt, das an die Nutzer des OP-Rams weitergegeben wird oder dessen Funktionseinrichtungen steuert.

Neben eine Anwendung auf die technische Arbeitsumgebung eines OP-Raums, die vorstehend beschrieben wurde, kann der beschriebene Ansatz jedoch auch auf andere technische Arbeitsumgebungen angewendet werden. Zu nenne sind hier beispielsweise industrielle Fertigungsumgebungen und Labore. Eine "technische Arbeitsumgebung" ist dabei eine Umgebung, wo Informationen zwischen einer Vielzahl von Menschen übertragen und kanalisiert werden muss und gleichzeitig eine Mensch-Maschine-Interaktion erfolgt, indem Mess-, Überwachungs-, oder Bearbeitungsvorrichtungen gesteuert oder überwacht werden.

In einer industriellen Fertigungsumgebung umfassen dann die von den Sensorvorrichtungen erfassten und in die Mischvorrichtung eingegebenen Daten dann beispielsweise Akustisches Feedback von Maschinen, insbesondere Arbeitsgeräusche, Motorgeräusche, Werkzeuggeräusche, oder Signale von anderen Sensoren. Bestimmte Schwellwerte können dann wiederum als Triggersignal dienen. So wird beispielsweise eine Palette von einem Sensor überwacht. Ist die Palette an der Maschine laut dem als Triggersignal fingierenden Sensorsignal voll, so wird über die Steuermatrix und entsprechende Ausgabekanäle rechtzeitig eine Neue geordert.

## Patentansprüche

1. Vorrichtung zur Bildung einer computergestützten Kommunikationsumgebung für eine technische Arbeitsumgebung, aufweisend:
Eine Mischvorrichtung, an die eine Vielzahl von Vorrichtungen anschliessbar sind, wobei die Vielzahl von Vorrichtungen umfassen:
eine Mehrzahl von Gegensprecheinrichtungen mit einem Mikrofon und einem Audioausgang, die jeweils einer Person in der technischen Arbeitsumgebung, vorzugsweise einem chirurgischen Operationsraum, zugeordnet sind; wobei
die Mischvorrichtung angepasst ist, um für jedes Paar von zwei an die Mischvorrichtung angeschlossenen Gegensprecheinrichtungen zu steuern, ob und in welche Richtung ein Fluss von Informationen zwischen den beiden angeschlossenen Gegensprecheinrichtungen ermöglicht wird;
wobei zur Steuerung des Informationsflusses eine Steuermatrix vorgesehen ist, die für jedes Paar der an die Mischvorrichtung angeschlossenen Vorrichtungen einen Matrixeintrag aufweist, der den Informationsfluss definiert, wobei die Vorrichtung ferner aufweist:
ein Messmikrofon zur Messung des Umgebungsschalls, das angepasst ist, den Schallpegel im Raum zu messen; und wobei die Mischvorrichtung aufweist:
ein computerimplementiertes, von der Mischvorrichtung ausgeführtes Steuerprogram, das angepasst ist, die Matrixeinträge abhängig von den von den angeschlossenen Vorrichtungen an die Mischvorrichtung gelieferten Daten dynamisch an die momentane Situation in der technischen Arbeitsumgebung anzupassen, wobei die Vorrichtung aufweist:
ein Gate für jedes der Mikrofone der Gegensprecheinrichtungen, das angepasst ist, den an einem der Mikrofone der Gegensprecheinrichtungen eintretenden Schall zur Weitergabe an die Audioausgänge anderen Gegensprecheinrichtungen verstärken oder unterdrücken zu können;
wobei das Steuerprogramm so ausgestaltet ist, dass die Verstärkung oder Unterdrückung des an einem Mikrofon eintretenden und an die Audioausgänge der anderen Gegensprecheinrichtungen auszugebenden Schalles durch das Gate abhängig von der Analyse des durch das Messmikrofon gemessenen Umgebungsschalls dynamisch angepasst wird,
**dadurch gekennzeichnet, dass** die Mischvorrichtung angepasst ist, das Gate an mindestens einer der Gegensprecheinrichtungen so zu steueren, dass es den eingehenden Schall ab einem gewissen Mindestschallpegel an Audioausgänge der anderen Gegensprecheinrichtungen weiterleitet, wobei die Mischvorrichtung angepasst ist, den Mindestschallpegel abhängig vom durch das Messmikrofon gemessenen Schallpegel des Raumes anzupassen.

2. Vorrichtung nach Anspruch 1, wobei die die Vorrichtung angepasst ist, die Sprache eines Benutzers dann in seinen eigenen Audioausgang einzuspielen, wenn sie den Mindestschallpegel aufweist und an Audioausgänge der anderen Benutzer weitergeleitet wird.

3. Vorrichtung nach einem der vorherghergehenden Ansprüche, wobei das Gate angepasst ist, vorzugsweise abhängig vom Eingangssignal, eine oder mehrere der folgenden Funktionen auszuführen:
Komplettes Blockieren oder komplettes Durchlassen des am Mikrofon eingehenden Eingangssignals an den Audioausgang von einer oder mehreren der anderen Gegensprecheinrichtungen;
Verstärken oder Unterdrücken des Eingangssignals, vorzugsweise in einem nichtlinearen Zusammenhang zwischen Verstärkung bzw. Unterdrückung und Eingangssignalstärke;
Begrenzung des Ausgangssignals auf eine maximale Signalstärke und/oder Ausgabe des Ausgangssignals mit einer Mindest-Signalstärke.

4. Vorrichtung nach einem der Ansprüche 1 bis 3, wobei die Mischvorrichtung ferner aufweist:
eine Analysevorrichtung zur spektralen Analyse des an dem Messmikrofon eingehenden Schalls, und wobei
die Mischvorrichtung angepasst ist, um beim Erkennen eines vorbestimmten spektralen Musters durch das Gate einer Gegensprecheinrichtung eine oder mehrere Spektralkomponenten, die dem erkannten spektralen Muster entsprechen, zu verstärken oder zu unterdrücken.

5. Vorrichtung nach einem der Ansprüche 1 bis 4, wobei die Mischvorrichtung ferner aufweist:
Eine Einrichtung zum Einspielen des von dem Messmikrofon aufgenommenen Umgebungsschalls in den Audioausgang einer oder mehrerer der Gegensprecheinrichtungen.

6. Vorrichtung nach Anspruch 5, wobei die Vorrichtung angepasst ist, den Schallpegel, mit dem das Umgebungssignal in den Audioausgang eingespielt wird, dynamisch anzupassen in Reaktion auf eine Anforderung des Benutzers oder ein von einer Analyseeinrichtung der Mischvorrichtung erkanntes externes Triggersignal.

7. Vorrichtung nach einem der Ansprüche 1 bis 6, wobei für einen oder mehrere Benutzer eine individuelle Hörkorrekturkurve in der Vorrichtung abgelegt ist und die Mischvorrichtung angepasst ist, den Audioausgang an der Gegensprecheinrichtung des Benutzers so anzusteuern, dass eine Anpassung des an den Benutzer ausgegebenen Audiosignals gemäß der abgelegten Hörkorrekturkurve erfolgt.

8. Vorrichtung nach einem der Ansprüche 1 bis 7, wobei die Vielzahl von an die Mischvorrichtung anschliessbaren Vorrichtungen umfasst:
eine Mehrzahl von Funktionseinheiten, die zur voll- oder halbautomatischen Ausübung einer Funktion in der technischen Arbeitsumgebung dienen,
eine Mehrzahl von Sensoren, die Parameter des Zustands der technischen Arbeitsumgebung, von in der technischen Arbeitsumgebung vorhandenen Funktionseinheiten, und Parameter des Zustands von in der technischen Arbeitsumgebung anwesenden Personen erfassen;
wobei die Mischvorrichtung angepasst ist, zu steuern, welche Informationen von der Mischvorrichtung an eine der angeschlossenen Vorrichtungen ausgegeben wird.

9. Vorrichtung nach einem der Ansprüche 1 bis 8, wobei es sich bei der technischen Arbeitsumgebung um eines der Folgenden handelt:
Einen chirurgischen Operationsraum;
einen Produktionsraum einer industriellen Fertigung;
ein Labor zur wissenschaftlichen oder industriellen Analyse von chemischen oder physikalischen Prozessen oder Stoffen,
einen Kontrollraum zur Überwachung oder Steuerung eines industriellen Produktionsprozesses,
ein Großraumbüro,
eine Konferenzumgebung.

10. Vorrichtung nach einem der Ansprüche 8 oder 9, wobei die Vorrichtung angepasst ist, dann, wenn die in der Mischvorrichtung von angeschlossenen Vorrichtungen eingehenden Signale ein Triggersignal anzeigen, eine Änderung der Matrixdaten vorzunehmen.

11. Vorrichtung nach einem der Ansprüche 1 bis 10, wobei
die Arbeitsumgebung ein OP-Raum ist und das Steuerprogramm Informationen über den zeitlichen Ablauf der Operation im OP-Raum umfasst und auf Grundlage dieser Informationen dann, wenn ein Eingangssignal der Sensordaten ein Triggerereignis anzeigt, das ein Eintreten eines Ereignisses im zeitlichen Ablauf der Operation darstellt, die Steuermatrix angepasst wird.

12. Vorrichtung nach einem der Ansprüche 10 oder 11, wobei als Triggersignal einem der Folgenden dient:
das Erreichen eines Signalwerts in einem oder mehreren Sensordaten, die das Erreichen eines bestimmten Punkts im zeitlichen Ablauf anzeigen;
das Erreichen eines Schwellwerts in einem oder mehreren Sensordaten; die Detektion eines Schlüsselworts oder Schlüsselsignals in einem erfassten akustischen Signal;
eine Eingabe des Benutzers zum Lernen einer neuen Situation.

13. Vorrichtung nach einem der vorhergehenden Ansprüche, wobei
das Steuerprogram ganz oder teilweise mittels eines neuronalen Netzes implementiert ist, das als Eingang die Signale von der Mehrzahl von Sensoren erhält und als Ausgang Daten der Steuermatrix liefert.

14. Vorrichtung nach einem der vorhergehenden Ansprüche, wobei die Eingangssignale der Steuermatrix Sprachsignale umfassen, die mittels Spracherkennung erfasst und auf Schlüsselbegriffe untersucht werden, wobei ein Schlüsselbegriff ein Triggersignal darstellt, wobei als Triggersignal zur Anpassung der Steuermatrix eines oder mehrere der Folgenden dienen:
Sensordaten von angeschlossenen Sensoren;
Videodaten oder Bilddaten aus Bilderkennung;
Sprachdaten aus Spracherkennung.

15. Vorrichtung nach einem der vorhergehenden Ansprüche, wobei die von den Sensoren erfassten und in die Mischvorrichtung eingegebenen Daten folgendes umfassen:
Akustisches Feedback von Maschinen, insbesondere Arbeitsgeräusche, Motorgeräusche, oder Werkzeuggeräusche, oder wobei
angeschlossene Sensoren, insbesondere mittels Barcode oder QR-Code, die Funktion eines Benutzers innerhalb einer Benutzergruppe identifizieren und basierend auf der Funktion dem Benutzer nur diejenigen Daten von der Mischvorrichtung übermittelt werden, die gemäß seiner Funktion und einem Hierarchie- oder Funktionsplan relevant sind.

## Claims

1. A device for creating a computer-assisted communication environment for a technical working environment, comprising:
a mixing device to which a plurality of devices can be connected,
wherein the plurality of devices comprise:
a plurality of intercom devices having a microphone and an audio output, each assigned to a person in the technical working environment, preferably a surgical operating room;
wherein the mixing device is adapted to control, for each pair of two intercom devices connected to the mixing device, whether and in which direction a flow of information between the two connected intercom devices is enabled;
wherein, for controlling the flow of information, a control matrix is provided, which has, for each pair of devices connected to the mixing device, a matrix entry defining the flow of information,
wherein the device further comprises:
a measurement microphone for measuring ambient sound, which is adapted to measure the sound level in the room; and wherein the mixing device comprises:
a computer-implemented control program executed by the mixing device, which is adapted to dynamically adapt the matrix entries to the current situation in the technical working environment as a function of the data supplied to the mixing device by the connected devices,
wherein the device comprises:
a gate for each of the microphones of the intercom devices, which is adapted to amplify or attenuate the sound entering one of the microphones of the intercom devices for forwarding to the audio outputs of other intercom devices;
wherein the control program is designed such that the amplification or attenuation of the sound entering a microphone and to be output to the audio outputs of the other intercom devices by the gate is dynamically adapted as a function of the analysis of the ambient sound measured by the measurement microphone,
**characterised in that**
the mixing device is adapted to control the gate at at least one of the intercom devices such that it forwards the incoming sound to the audio outputs of the other intercom devices only above a certain minimum sound level, wherein the mixing device is adapted to adapt the minimum sound level as a function of the sound level of the room measured by the measurement microphone.

2. The device according to claim 1, wherein the device is adapted to feed the speech of a user into the user's own audio output when it reaches the minimum sound level and is forwarded to the audio outputs of the other users.

3. The device according to any one of the preceding claims, wherein the gate is adapted, preferably as a function of the input signal, to perform one or more of the following functions:
completely blocking or completely passing the input signal entering the microphone to the audio output of one or more of the other intercom devices;
amplifying or attenuating the input signal, preferably in a non-linear relationship between amplification or attenuation and input signal strength;
limiting the output signal to a maximum signal strength and/or
outputting the output signal with a minimum signal strength.

4. The device according to any one of claims 1 to 3, wherein the mixing device further comprises:
an analysis device for spectral analysis of the sound entering the measurement microphone,
and wherein the mixing device is adapted, upon detection of a predetermined spectral pattern, to amplify or attenuate, by means of the gate of an intercom device, one or more spectral components corresponding to the detected spectral pattern.

5. The device according to any one of claims 1 to 4, wherein the mixing device further comprises:
a device for feeding the ambient sound recorded by the measurement microphone into the audio output of one or more of the intercom devices.

6. The device according to claim 5, wherein the device is adapted to dynamically adjust the sound level at which the ambient signal is fed into the audio output in response to a user request or to an external trigger signal detected by an analysis device of the mixing device.

7. The device according to any one of claims 1 to 6, wherein an individual hearing correction curve for one or more users is stored in the device and the mixing device is adapted to control the audio output at the intercom device of the user such that the audio signal output to the user is adapted in accordance with the stored hearing correction curve.

8. The device according to any one of claims 1 to 7, wherein the plurality of devices connectable to the mixing device comprises:
a plurality of functional units configured for fully or partially automated execution of a function in the technical working environment;
a plurality of sensors configured to capture parameters of the state of the technical working environment, of functional units present in the technical working environment, and parameters of the state of persons present in the technical working environment;
wherein the mixing device is adapted to control which information is output from the mixing device to one of the connected devices.

9. The device according to any one of claims 1 to 8, wherein the technical working environment is one of the following:
a surgical operating room;
a production facility of an industrial manufacturing process;
a laboratory for scientific or industrial analysis of chemical or physical processes or substances,
a control room for monitoring or controlling an industrial production process,
an open-plan office,
a conference environment.

10. The device according to any one of claims 8 or 9, wherein the device is adapted, when the signals received in the mixing device from connected devices indicate a trigger signal, to perform a modification of the matrix data.

11. The device according to any one of claims 1 to 10, wherein
the working environment is an operating room and the control program comprises information relating to the temporal sequence of the operation in the operating room and, on the basis of this information, when an input signal of the sensor data indicates a trigger event representing the occurrence of an event in the temporal sequence of the operation, the control matrix is adapted.

12. The device according to any one of claims 10 or 11, wherein the trigger signal comprises one of the following:
the reaching of a signal value in one or more sensor data indicating that a specific point in the temporal sequence has been reached;
the reaching of a threshold value in one or more sensor data;
the detection of a keyword or key signal in a captured acoustic signal;
a user input for learning a new situation.

13. The device according to any one of the preceding claims, wherein
the control program is implemented wholly or partially by means of a neural network,
which receives, as input, signals from the plurality of sensors and provides, as output, data of the control matrix.

14. The device according to any one of the preceding claims, wherein the input signals of the control matrix comprise speech signals which are captured by means of speech recognition and analysed for keywords, wherein a keyword represents a trigger signal,
wherein one or more of the following serve as trigger signals for adapting the control matrix:
sensor data from connected sensors;
video data or image data from image recognition;
speech data from speech recognition.

15. The device according to any one of the preceding claims, wherein the data captured by the sensors and input into the mixing device comprise:
acoustic feedback from machines, in particular operational noises, engine noises, or tool noises,
or wherein connected sensors, in particular by means of a barcode or QR code, identify the function of a user within a user group and, based on the function, only those data are transmitted by the mixing device to the user which are relevant according to the user's function and a hierarchy or functional plan.

## Revendications

1. Dispositif destiné à la formation d'un environnement de communication assisté par ordinateur pour un environnement de travail technique, comprenant :
un dispositif de mélange auquel une pluralité de dispositifs peuvent être raccordés,
la pluralité de dispositifs comprenant :
une pluralité de dispositifs d'intercommunication comportant un microphone et une sortie audio, chacun étant associé à une personne dans l'environnement de travail technique, de préférence dans une salle d'opération chirurgicale ;
dans lequel
le dispositif de mélange est adapté pour commander, pour chaque paire de deux dispositifs d'intercommunication raccordés au dispositif de mélange, si et dans quelle direction un flux d'informations entre les deux dispositifs d'intercommunication raccordés est autorisé ;
dans lequel, pour commander le flux d'informations, une matrice de commande est prévue, laquelle comporte, pour chaque paire de dispositifs raccordés au dispositif de mélange, une entrée de matrice définissant le flux d'informations, le dispositif comprenant en outre :
un microphone de mesure destiné à mesurer le bruit ambiant, lequel est adapté pour mesurer le niveau sonore dans la pièce ; et dans lequel le dispositif de mélange comprend :
un programme de commande implémenté par ordinateur, exécuté par le dispositif de mélange, lequel est adapté pour adapter dynamiquement les entrées de matrice à la situation actuelle dans l'environnement de travail technique en fonction des données fournies au dispositif de mélange par les dispositifs raccordés, le dispositif comprenant :
une porte pour chacun des microphones des dispositifs d'intercommunication, laquelle est adaptée pour amplifier ou atténuer le son entrant dans l'un des microphones des dispositifs d'intercommunication en vue de sa transmission aux sorties audio d'autres dispositifs d'intercommunication ;
dans lequel le programme de commande est configuré de telle sorte que l'amplification ou l'atténuation du son entrant dans un microphone et destiné à être délivré aux sorties audio des autres dispositifs d'intercommunication par la porte est adaptée dynamiquement en fonction de l'analyse du bruit ambiant mesuré par le microphone de mesure,
**caractérisé en ce que**
le dispositif de mélange est adapté pour commander la porte au niveau d'au moins un des dispositifs d'intercommunication de telle sorte qu'elle ne transmet le son entrant vers les sorties audio des autres dispositifs d'intercommunication qu'à partir d'un certain niveau sonore minimal, le dispositif de mélange étant adapté pour ajuster le niveau sonore minimal en fonction du niveau sonore de la pièce mesuré par le microphone de mesure.

2. Dispositif selon la revendication 1, dans lequel le dispositif est adapté pour injecter la parole d'un utilisateur dans sa propre sortie audio lorsqu'elle atteint le niveau sonore minimal et qu'elle est transmise aux sorties audio des autres utilisateurs.

3. Dispositif selon l'une quelconque des revendications précédentes, dans lequel la porte est adaptée, de préférence en fonction du signal d'entrée, pour exécuter une ou plusieurs des fonctions suivantes :
• blocage complet ou transmission complète du signal d'entrée entrant dans le microphone vers la sortie audio d'un ou de plusieurs des autres dispositifs d'intercommunication ;
• amplification ou atténuation du signal d'entrée, de préférence selon une relation non linéaire entre amplification ou atténuation et intensité du signal d'entrée ;
• limitation du signal de sortie à une intensité maximale et/ou
• émission du signal de sortie avec une intensité minimale.
•

4. Dispositif selon l'une quelconque des revendications 1 à 3, dans lequel le dispositif de mélange comprend en outre :
un dispositif d'analyse pour l'analyse spectrale du son entrant dans le microphone de mesure,
et dans lequel le dispositif de mélange est adapté pour, lors de la détection d'un motif spectral prédéterminé, amplifier ou atténuer, au moyen de la porte d'un dispositif d'intercommunication, une ou plusieurs composantes spectrales correspondant au motif spectral détecté.

5. Dispositif selon l'une quelconque des revendications 1 à 4, dans lequel le dispositif de mélange comprend en outre :
un dispositif destiné à injecter le bruit ambiant capté par le microphone de mesure dans la sortie audio d'un ou de plusieurs des dispositifs d'intercommunication.

6. Dispositif selon la revendication 5, dans lequel le dispositif est adapté pour ajuster dynamiquement le niveau sonore auquel le signal ambiant est injecté dans la sortie audio en réponse à une demande de l'utilisateur ou à un signal de déclenchement externe détecté par un dispositif d'analyse du dispositif de mélange.

7. Dispositif selon l'une quelconque des revendications 1 à 6, dans lequel une courbe de correction auditive individuelle pour un ou plusieurs utilisateurs est enregistrée dans le dispositif et le dispositif de mélange est adapté pour commander la sortie audio du dispositif d'intercommunication de l'utilisateur de telle sorte qu'une adaptation du signal audio délivré à l'utilisateur soit effectuée conformément à la courbe de correction auditive enregistrée.

8. Dispositif selon l'une quelconque des revendications 1 à 7, dans lequel la pluralité de dispositifs raccordables au dispositif de mélange comprend :
une pluralité d'unités fonctionnelles destinées à l'exécution totalement ou partiellement automatisée d'une fonction dans l'environnement de travail technique ;
une pluralité de capteurs destinés à détecter des paramètres de l'état de l'environnement de travail technique, des unités fonctionnelles présentes dans l'environnement de travail technique, et des paramètres de l'état des personnes présentes dans l'environnement de travail technique ;
le dispositif de mélange étant adapté pour commander quelles informations sont émises par le dispositif de mélange vers l'un des dispositifs raccordés.

9. Dispositif selon l'une quelconque des revendications 1 à 8, dans lequel l'environnement de travail technique est l'un des suivants :
une salle d'opération chirurgicale ;
un atelier de production industrielle ;
un laboratoire pour l'analyse scientifique ou industrielle de processus ou de substances chimiques ou physiques ;
une salle de contrôle pour la surveillance ou la commande d'un processus de production industrielle ;
un bureau en espace ouvert ;
un environnement de conférence.

10. Dispositif selon l'une quelconque des revendications 8 ou 9, dans lequel le dispositif est adapté, lorsque les signaux reçus dans le dispositif de mélange à partir des dispositifs raccordés indiquent un signal de déclenchement, à effectuer une modification des données de la matrice.

11. Dispositif selon l'une quelconque des revendications 1 à 10, dans lequel l'environnement de travail est une salle d'opération et le programme de commande comprend des informations relatives au déroulement temporel de l'opération dans la salle d'opération et, sur la base de ces informations, lorsque un signal d'entrée des données de capteurs indique un événement déclencheur représentant la survenue d'un événement dans le déroulement temporel de l'opération, la matrice de commande est adaptée.

12. Dispositif selon l'une quelconque des revendications 10 ou 11, dans lequel le signal de déclenchement comprend l'un des éléments suivants :
• l'atteinte d'une valeur de signal dans une ou plusieurs données de capteurs indiquant l'atteinte d'un point déterminé dans le déroulement temporel ;
• l'atteinte d'une valeur seuil dans une ou plusieurs données de capteurs ;
• la détection d'un mot-clé ou d'un signal-clé dans un signal acoustique capté ;
• une entrée de l'utilisateur pour l'apprentissage d'une nouvelle situation.

13. Dispositif selon l'une quelconque des revendications précédentes, dans lequel
le programme de commande est implémenté en tout ou en partie au moyen d'un réseau neuronal,
lequel reçoit en entrée les signaux provenant de la pluralité de capteurs et fournit en sortie des données de la matrice de commande.

14. Dispositif selon l'une quelconque des revendications précédentes, dans lequel les signaux d'entrée de la matrice de commande comprennent des signaux vocaux captés au moyen d'une reconnaissance vocale et analysés en vue de mots-clés, un mot-clé constituant un signal de déclenchement,
et dans lequel un ou plusieurs des éléments suivants servent de signaux de déclenchement pour l'adaptation de la matrice de commande :
• données de capteurs provenant de capteurs raccordés ;
• données vidéo ou données d'image issues de la reconnaissance d'images ;
• données vocales issues de la reconnaissance vocale.

15. Dispositif selon l'une quelconque des revendications précédentes, dans lequel les données captées par les capteurs et introduites dans le dispositif de mélange comprennent :
un retour acoustique de machines, en particulier des bruits de fonctionnement, des bruits de moteur ou des bruits d'outils,
ou dans lequel des capteurs raccordés, notamment au moyen d'un code-barres ou d'un code QR, identifient la fonction d'un utilisateur au sein d'un groupe d'utilisateurs et, en fonction de cette fonction, seules les données pertinentes selon sa fonction et un plan hiérarchique ou fonctionnel sont transmises à l'utilisateur par le dispositif de mélange.
